# FASCICULE DE BREVET EUROPEEN

(11) **EP 2 506 337 B1**
(45) Date de publication et mention de la délivrance du brevet: **23.09.2015**
(21) Numéro de dépôt: 12161670.0
(22) Date de dépôt: 28.03.2012
(51) Int. Cl.: H01M 2/10, H01M 10/0525, H01M 10/42, H01M 10/46

(54) **Implantation de baies batteries en conteneur**
Anlage von Batteriebuchten in einem Container
Arrangement of battery compartments in a container

(30) Priorité: 01.04.2011 FR 1152845
(43) Date de publication de la demande: 03.10.2012
(73) Titulaire: SAFT, 93170 Bagnolet (FR)
(72) Inventeur: Narbonne, Alexandre, 33000 Bordeaux (FR); Bobinet, Julien, 33450 Saint Loubes (FR)
(74) Mandataire: Hirsch & Associés

(56) Documents cités:
- WO-A1-2010/042659
- US-A1- 2007 144 804
- US-A1- 2009 293 759
- Princeton Power Systems: "Energy Storage System", Technical Specifications , 28 janvier 2011 (2011-01-28), XP002678712, Extrait de l'Internet: URL:http://princetonpower.com/prod_esm.sht ml [extrait le 2012-06-27]

## Description

### DOMAINE DE L'INVENTION

L'invention se rapporte au domaine des conteneurs de transport et des abris préfabriqués transportables utilisés comme installation de stockage de batteries en vue de l'utilisation de ces batteries comme source d'alimentation de secours, en particulier pour des équipements électriques/électroniques dans le domaine des télécommunications.

### ETAT DE LA TECHNIQUE

On connaît des batteries conçues à partir d'éléments électrochimiques de type lithium-ion ou nickel-hydrure métallique destinées à servir de source d'alimentation de secours pour les réseaux de télécommunication basse tension (24 à 48 V). Ces batteries peuvent être disposées dans un bâti modulaire, encore appelé baie ou « rack », dont la largeur est normalisée à 482,6 mm (19 pouces). Chaque baie peut contenir plusieurs batteries délivrant chacune 48 V. Un convertisseur de courant continu en courant alternatif (DC/AC) permet de convertir le courant continu généré par les batteries en un courant alternatif utilisable pour l'alimentation des systèmes électroniques des réseaux de télécommunication. On pourra se reporter au site www.saftbatteries.com qui donne de plus amples informations sur ce type de sources d'alimentation de secours, en particulier les systèmes batteries de la gamme Intensium.

La norme CEI 60297 fixe à 482,6 mm (19 pouces) la largeur d'une baie destinée à recevoir divers appareils électriques/électroniques, par exemples des batteries. La baie comprend deux montants verticaux parallèles en métal espacés de 457,2 mm (soit 18 pouces). Des trous sont forés à intervalles réguliers sur la partie frontale de chaque montant de manière à ce qu'ils soient espacés de 464,82 mm (soit 18,3 pouces), ce qui donne une largeur totale de baie de 482,6 mm (soit 19 pouces). Les appareils destinés à être installés dans un tel rangement sont souvent qualifiés de « rackables ». Leur hauteur est habituellement un multiple d'une longueur nommée U (pour unité) dont la dimension a été développée pour le système Eurocard. Un U vaut 44,45 mm (soit 1,75 pouces). 1U, 2U, 3U, 4U sont des tailles courantes.

Une baie équipée de batteries forme une source d'énergie autonome qui peut être déplacée et installée à proximité de systèmes électroniques qui seront alimentés par ces batteries en cas de coupure de courant du secteur. Plusieurs baies peuvent être associées afin de pouvoir délivrer une plus forte quantité d'énergie au système électronique. Les baies peuvent être regroupées dans un conteneur qui est placé sur le châssis d'un train de marchandises ou sur un bateau afin d'être transporté vers un lieu donné.

Dans le domaine du transport, un conteneur est un caisson métallique, en forme de parallélépipède, conçu pour le transport de marchandises par différents modes de transport, tel que le transport par voie maritime. Ses dimensions ont été normalisées au niveau international. Selon la norme ISO, il existe trois grandes séries de conteneurs de largeur et de hauteur fixées mais de longueur variable. Les dimensions extérieures standards sont :
- longueurs de 6,058 m (20 pieds), 9,087 m (30 pieds), 12,192 m (40 pieds) ;
- largeur de 2,438 m (8 pieds) ;
- hauteurs de 2,591 m (8,5 pieds), 2,743 m (9 pieds) et 2,9 m (9,6 pieds).

Tous les conteneurs de ces trois séries ont la même largeur, 2,438 m (8 pieds), ce qui a permis le développement de navires porte-conteneurs. Les dimensions intérieures standards sont :
- longueur de 5,905 m (20 pieds), 12,04 m (40 pieds) ;
- largeur de 2,33 m ;
- hauteur de 2,38 m ;
- hauteur passage de porte 2,30 m.

Le document US 2009/0293759 décrit l'utilisation d'un conteneur pour le stockage de batteries. Le conteneur est placé sur le châssis d'un train de marchandises. Les batteries fonctionnent comme source d'énergie d'appoint pour compléter l'énergie produite par la locomotive. Elles se déchargent et aident au déplacement du train lorsque celui-ci entame une montée. A l'inverse, elles sont rechargées lorsque le train effectue une descente. Le conteneur peut être retiré du châssis du train en utilisant une grue.

Le document US 2009/0126293 décrit un abri préfabriqué de longueur comprise entre 2,4 et 4,2 m (8 et 14 pieds) abritant une pluralité de baies supportant des équipements électroniques.

Le document WO2010042659 décrit une installation de stockage transportable selon le préambule de la revendication 1.

Dans les systèmes d'alimentation de secours utilisant un conteneur comme installation de stockage de batteries, les baies sont disposées dans le sens de la longueur du conteneur sur une ou deux rangées. On pourra par exemple se référer au système DPR™ 15-100C équipé de batteries au plomb, commercialisé par la société Xtreme Power, Inc., aux systèmes A123 équipés de batteries de type lithium-ion, commercialisés par la société A123 Systems, Inc. et au système de stockage d'énergie par batteries (BESS) présenté au 11^{ème} congrès ELBC (European Lead Battery Conference) à Istanbul, le 24 septembre 2010. Or, une telle disposition des baies ne permet pas d'obtenir une densité énergétique suffisante.

On cherche donc une disposition de baies dans une installation de stockage transportable qui permette d'augmenter le nombre de baies par unité de surface dans ladite installation de stockage transportable. L'augmentation du nombre de baies permet d'augmenter l'énergie surfacique. En particulier, on cherche à augmenter le nombre de baies par unité de surface d'un conteneur de dimensions normalisées. En particulier, on cherche à augmenter le nombre de baies d'une largeur de 482,6 mm (19 pouces) dans un conteneur de dimensions normalisées, par exemple de 6,1 m (20 pieds), de 12,2 m (40 pieds), de 13,7 m (45 pieds) ou de 16,2 m (53 pieds) de longueur.

### RESUME DE L'INVENTION :

A cet effet, l'invention propose une installation de stockage (1) selon la revendication 1.

On entend par face d'insertion de la baie, le côté de la baie par lequel on introduit une batterie pour la loger à l'intérieur de la baie. La face d'insertion est généralement définie par le plan formé par les deux montants verticaux qui servent à fixer la batterie à la baie. La face d'insertion sert aussi de face d'extraction de la batterie.

La baie peut ne pas comprendre de montants verticaux servant d'armature et être essentiellement constituée d'un plateau horizontal à la surface duquel sont disposés des moyens de fixation de la batterie au plateau horizontal. Dans ce cas, la face d'insertion est le côté du plateau qui permet d'amener la batterie en contact des éléments de fixation.

Autrement dit, l'invention consiste à disposer les baies dans le sens transversal de l'installation de stockage. L'installation de stockage transportable est de préférence un conteneur de transport ou un abri préfabriqué.

Selon un mode de réalisation, le conteneur est un conteneur de transport de dimensions normalisées, en particulier par la norme ISO TC-104. La longueur peut être choisie parmi les valeurs suivantes : 6,1 m (20 pieds), 12,2 m (40 pieds), 13,7 m (45 pieds) et 16,2 m (53 pieds). La largeur est de 2,438 m (8 pieds). La hauteur peut être choisie parmi les valeurs suivantes : 2,591 m (8,5 pieds), 2,743 m (9 pieds) et 2,9 m (9,6 pieds).

Selon un mode de réalisation, au moins 75% des baies sont disposées de manière à ce que ladite au moins une face d'insertion soit disposée perpendiculairement à la direction définie par la longueur de l'installation de stockage.

Selon un mode de réalisation, toutes les baies sont disposées de manière à ce que ladite au moins une face d'insertion soit disposée perpendiculairement à la direction définie par la longueur de l'installation de stockage.

Selon un mode de réalisation, les dimensions de chaque baie sont normalisées, en particulier par la norme CEI 60297. La largeur de chaque baie est de 482,6 mm (19 pouces).

L'installation de stockage selon l'invention comprend au moins installation de stockage deux rangées de baies disposées perpendiculairement à la direction définie par la longueur de l'installation de stockage et il existe au moins un couloir de circulation entre ces deux rangées de baies.

Selon un mode de réalisation, l'installation de stockage transportable comprend au moins une rangée de 4 baies.

Selon un mode de réalisation, l'installation de stockage a une longueur de 6,1 m (20 pieds) et comprend 6 rangées de 4 baies.

Selon un mode de réalisation, l'installation de stockage a une longueur de 6,1 m (20 pieds) et comprend 4 rangées de 4 baies et 2 rangées de 2 baies.

Selon un mode de réalisation, l'installation de stockage a une longueur de 12,2 m (40 pieds) et comprend 12 rangées de 4 baies.

Selon un mode de réalisation, l'installation de stockage a une longueur de 12,2 m (40 pieds) et comprend 8 rangées de 4 baies, deux rangées de 2 baies et deux rangées de 3 baies dont au moins une face pour l'insertion des batteries est disposée selon la direction de la longueur de l'installation.

Selon un mode de réalisation, l'installation de stockage est de format parallélépipédique, et au moins une paroi latérale située dans la direction définie par la longueur de l'installation de stockage comprend au moins une ouverture.

Selon un mode de réalisation, l'installation de stockage comprend des batteries, de préférence de type lithium-ion.

L'invention a également pour objet un ensemble formé par un empilement d'au moins deux installations de stockage selon l'invention.

L'invention a également pour objet un ensemble formé par la juxtaposition d'au moins deux installations de stockage reposant sur une même surface.

### BREVE DESCRIPTION DES FIGURES

La Figure 1 est une représentation schématique d'une batterie (3) et son montage sur une baie (2) de 482,6 mm (19 pouces).
La Figure 2 est une représentation schématique d'un conteneur (1) de 6,1 m (20 pieds) dans lequel la disposition des baies (2) est selon l'invention. Le conteneur présente 4 rangées de 4 baies et 2 rangées de 2 baies.
La Figure 3 est une représentation schématique d'un conteneur (1) de 12,2 m (40 pieds) dans lequel la disposition des baies (2) est selon l'invention. Il présente 8 rangées de 4 baies, 2 rangées de 2 baies et 2 rangées de 3 baies disposées contre la paroi latérale du conteneur.
La Figure 4 est une représentation schématique d'un conteneur (1) selon l'art antérieur vu de dessus, dans lequel toutes les baies (2) sont disposées de manière à ce que leurs faces d'insertion des batteries soient disposées selon la longueur du conteneur (disposition A).
La Figure 5 est une représentation schématique d'un conteneur (1) selon l'invention vu de dessus, dans lequel toutes les baies (2) sont disposées de manière à ce que les faces pour l'insertion des batteries soient disposées selon la largeur du conteneur (disposition B). La largeur des baies est de 482,6 mm (19 pouces).
La Figure 6 est une représentation schématique d'un conteneur (1) selon l'invention vu de dessus, dans lequel :
   - 75% des baies (2) sont disposées de manière à ce que les faces pour l'insertion des batteries soient disposées selon la largeur du conteneur;
   - 25% des baies (2) sont disposées de manière à ce que les faces pour l'insertion des batteries soient disposées selon la longueur du conteneur. (disposition C).

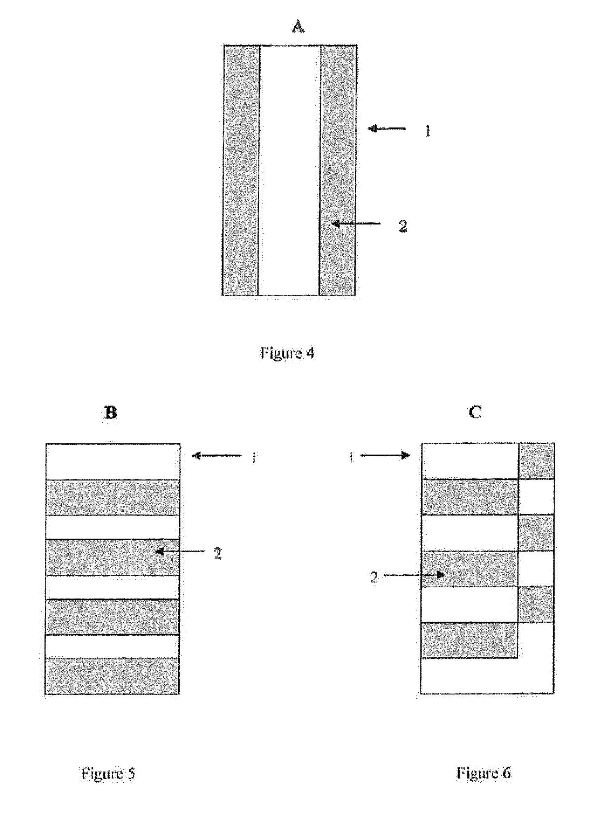

   Dans les Figures 4-6, la largeur des baies est de 482,6 mm (19 pouces) et la largeur du conteneur est de 2,438 m (8 pieds).

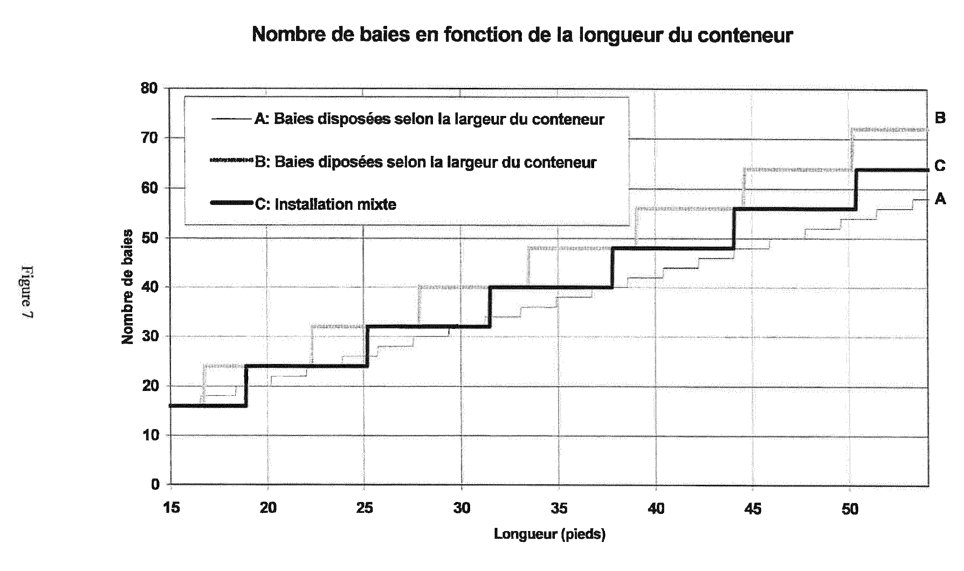

La Figure 7 représente le nombre de baies qu'il est possible de loger dans un conteneur en fonction de leur disposition : disposition A selon l'art antérieur telle que représentée à la Figure 4; dispositions B et C selon l'invention telles que représentées aux Figures 5 et 6.

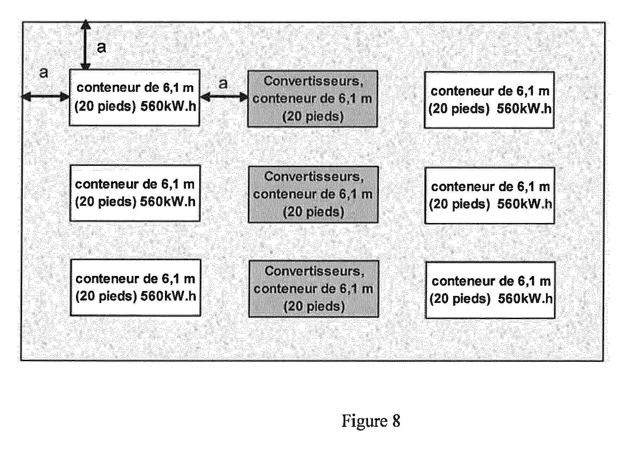

La Figure 8 représente une vue de dessus d'un champ d'exploitation dans lequel sont installés six conteneurs selon l'invention d'une longueur de 6,1 m (20 pieds), pouvant délivrer chacun une énergie de 560 kW.h.

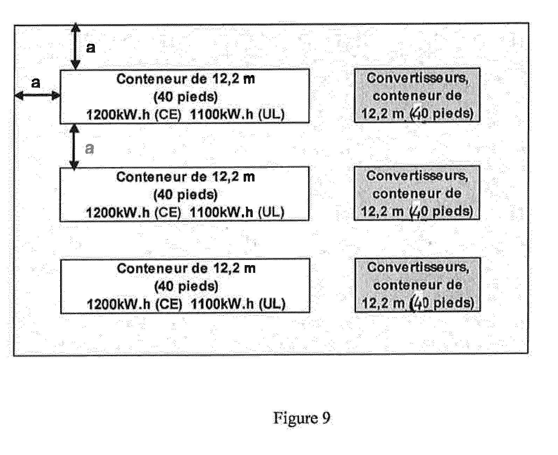

La Figure 9 représente une vue de dessus d'un champ d'exploitation dans lequel sont installés trois conteneurs selon l'invention d'une longueur de 12,2 m (40 pieds), pouvant délivrer chacun une énergie de 1200 kW.h.

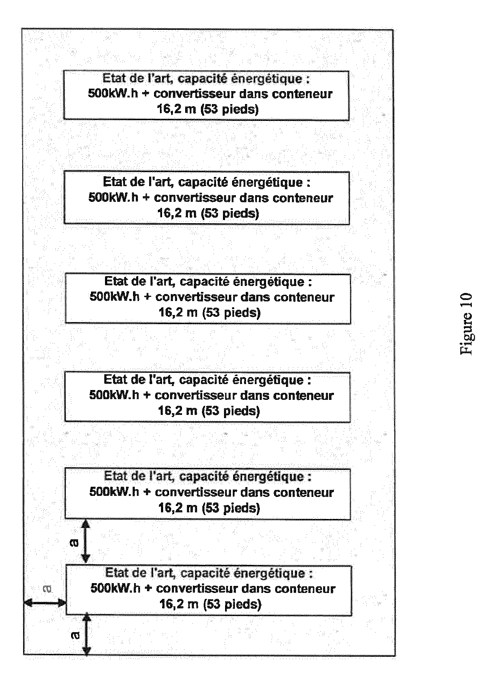

La Figure 10 représente une vue de dessus d'un champ d'exploitation dans lequel sont installés six conteneurs selon l'art antérieur d'une longueur de 16,2 m (53 pieds), pouvant délivrer chacun une énergie de 500 kW.h.

### EXPOSE DES MODES DE REALISATION

Dans l'invention, on désigne par le terme de batterie l'association de plusieurs générateurs électrochimiques en une configuration série et/ou parallèle, déterminée en fonction de la tension nominale et de la quantité d'énergie (W.h) désirées pour alimenter l'application électrique. Les générateurs électrochimiques sont placés dans un boîtier commun et l'on désigne l'ensemble par le terme de batterie. Plusieurs batteries peuvent être empilées dans une baie. Des normes définissent les dimensions des baies pouvant recevoir les batteries. On peut citer sans être limitatif, les normes CEI 60297, CEI 60917, CEI 61969 et ETS 300 119-3 (European Telecommunication Standard).

Par exemple, la norme CEI 60297 spécifie une largeur de baie de 482,6 mm (19 pouces).

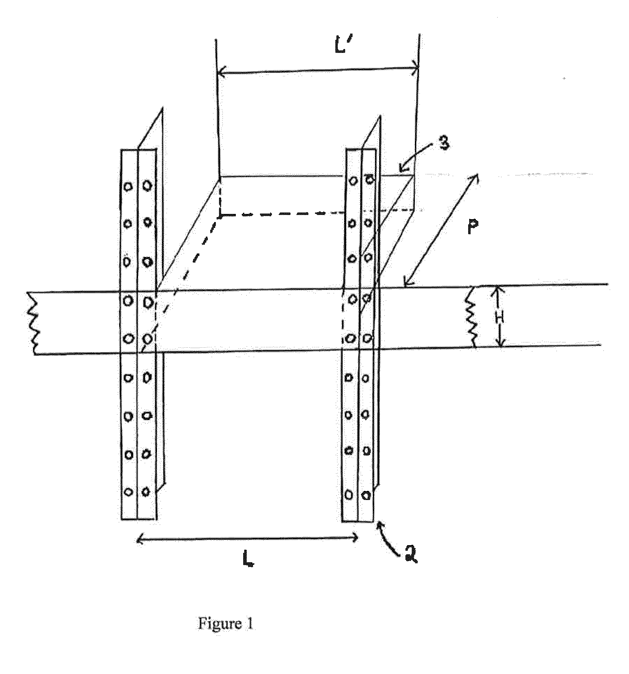

La Figure 1 est une représentation schématique de la face d'une baie (2) pour l'insertion d'une batterie (3). Cette figure indique la largeur L de la baie, la largeur L', la hauteur H et la profondeur P de la batterie.

La batterie présente la forme d'un parallélépipède. Sa largeur L' peut être égale à 482,6 mm (19 pouces) moins la largeur des deux montants verticaux qui servent d'armature de la baie, soit dans la plage allant généralement de 406,4 à 457,2 mm (16 à 18 pouces). Une largeur égale à la moitié de la largeur de la baie est également envisageable, soit une largeur dans la plage allant de 203,2 à 228,6 mm (8 à 9 pouces).

La batterie comporte typiquement sur une de ses faces une plaque de largeur 482,6 mm (19 pouces) qui comprend généralement un interrupteur, des voyants indiquant à l'opérateur l'état de charge de la batterie, l'état de vieillissement de la batterie, ainsi que des connecteurs pour l'acquisition de données relatives au fonctionnement de la batterie. La plaque peut comprendre à chacune de ses extrémités un moyen de fixation de la batterie aux deux montants verticaux de la baie.

Comme indiqué plus haut, la face d'insertion est constituée par le plan passant par les deux montants verticaux de la baie. Une fois la batterie fixée aux deux montants verticaux, la plaque comprenant les indicateurs donnant les informations sur le fonctionnement de la batterie est donc située sur la face d'insertion de la batterie.

La hauteur H de la batterie est généralement un multiple d'une longueur nommée U (pour unité) dont la dimension a été développée pour le système Eurocard. Un U vaut 44,45 mm (1,75 pouces). 1U (44,45 mm), 2U (88,9 mm), 3U (133,35 mm) et 4U (177,8 mm) sont des hauteurs possibles.

La profondeur P de la batterie ne répond pas à des limitations particulières. Les baies équipées des batteries sont ensuite installées dans une installation de stockage transportable, telle qu'un conteneur ou un abri préfabriqué. Un conteneur est généralement constitué de l'assemblage de plusieurs panneaux de métal ce qui lui confère une grande solidité. En raison de leur solidité, plusieurs conteneurs peuvent être superposés. Les dimensions du conteneur satisfont de préférence aux exigences de la norme ISO TC-104. La longueur du conteneur peut prendre les valeurs suivantes : 6,1 m (20 pieds), 12,2 m (40 pieds), 13,7 m (45 pieds) et 16,2 m (53 pieds). La largeur est de 2,438 m (8 pieds). La hauteur du conteneur peut prendre les valeurs suivantes 2,591 m (8,5 pieds), 2,743 m (9 pieds) et 2,9 m (9,6 pieds).

Un abri préfabriqué est obtenu par l'assemblage de panneaux de matériaux divers, tels que le béton, le métal, le bois, et les matériaux plastiques. Ses dimensions peuvent être normalisées. Par exemple, la largeur peut être normalisée à 2,4 m, ce qui correspond au gabarit routier. Il est précisé que l'installation de stockage transportable peut être déplacée d'un lieu à un autre, par exemple par voie routière, par voie ferrée ou par voie maritime et que lors du transport, les batteries sont stockées dans l'installation et sont disposées selon l'invention. L'installation de stockage transportable peut être un abri préfabriqué en béton, aux normes du transport routier, qui se transporte et contient pendant le transport, des batteries agencées selon la disposition décrite ci-après.

Selon l'invention, on installe chaque baie dans l'installation de stockage transportable de manière à ce que les faces d'insertion des batteries soient disposées perpendiculairement à la direction définie par la longueur de l'installation de stockage. Cette disposition permet une densité d'énergie plus importante que pour une disposition dans la direction selon la longueur de l'installation de stockage.

Plusieurs installations de stockage peuvent être soit empilées les unes sur les autres, soient accolées et reposer sur une même surface.

Pour un conteneur d'une largeur normalisée à 2,4 m (8 pieds), on peut regrouper les baies pour former une rangée de 4 baies dont la longueur totale est de 4×19 pouces = 76 pouces soit 1,93 m. Un tel alignement occupe pratiquement toute la largeur interne du conteneur qui est normalisée à 2,33 m.

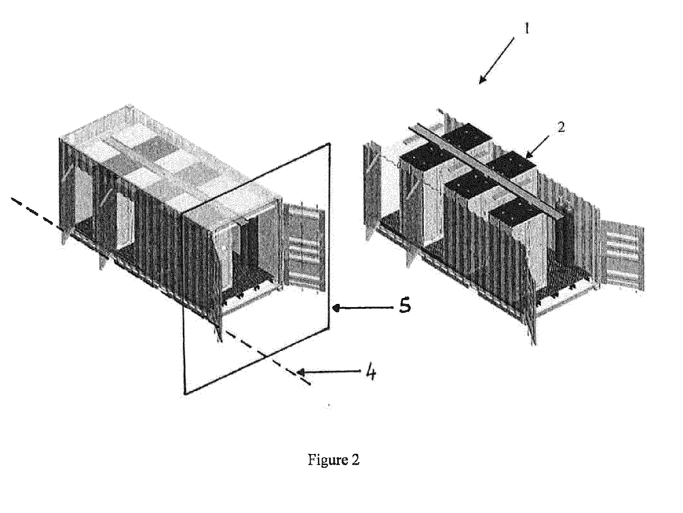

Un conteneur long de 6,1 m (20 pieds) peut recevoir par exemple 6 rangées de 4 baies. On peut également prévoir de ménager un espace libre pour le stockage par exemple d'un équipement anti-incendie, en créant 4 rangées de 4 baies et 2 rangées de 2 baies tel qu'illustré à la Figure 2. La direction définie par la longueur de l'installation de stockage est matérialisée par une ligne en pointillés (4). La face d'insertion des batteries est matérialisée par le plan (5). Le plan (5) est bien perpendiculaire à la direction (4) définie par la longueur de l'installation de stockage.

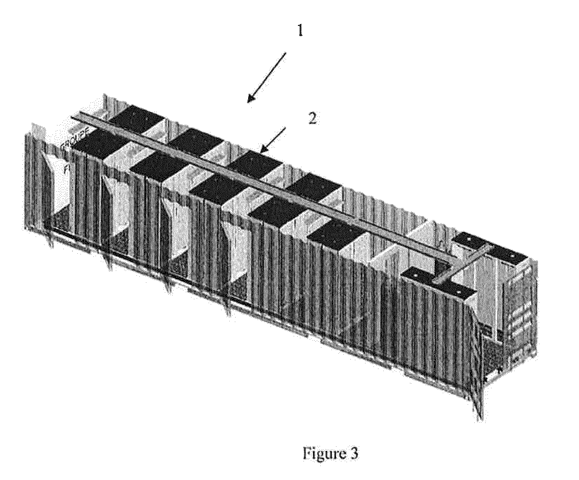

Un conteneur long de 12,2 m (40 pieds) peut recevoir par exemple :
- 12 rangées de 4 baies ou
- 8 rangées de 4 baies, 2 rangées de 2 baies et 2 rangées de 3 baies disposées contre la paroi latérale du conteneur dans le sens de la longueur du conteneur. Ce mode de réalisation est illustré Figure 3.

De préférence, l'installation de stockage comprend au moins un dispositif de conversion d'énergie tel qu'un tel qu'un onduleur, un transformateur, un chargeur, un convertisseur tel qu'un convertisseur de courant continu - courant continu (DC/DC), un convertisseur de courant continu - courant alternatif (DC/AC), un convertisseur de courant alternatif - courant continu (AC/DC) ou un convertisseur de courant alternatif - courant alternatif (AC/AC).

Ces dispositifs peuvent être de dimensions diverses. Dans certains cas, ces dispositifs sont dans des armoires qui peuvent être disposées comme les baies de l'invention. Dans d'autres cas, leurs dimensions ne sont pas normalisées.

La Figure 4 est une représentation schématique d'un conteneur selon l'art antérieur, dans lequel toutes les baies sont disposées de manière à ce que leur faces pour l'insertion des batteries soient disposées dans la direction selon la longueur du conteneur.

La Figure 5 est une représentation schématique d'un conteneur selon l'invention, dans lequel toutes les baies sont disposées de manière à ce que leurs faces pour l'insertion des batteries soient disposées perpendiculairement à la direction définie par la longueur du conteneur.

La Figure 6 est une représentation schématique d'un conteneur selon l'invention, dans lequel :
- 75% des baies sont disposées de manière à ce que leurs faces pour l'insertion des batteries soient disposées perpendiculairement à la direction définie par la longueur du conteneur;
- 25% des batteries sont disposées de manière à ce que leurs faces pour l'insertion des batteries soient disposées selon la direction définie par la longueur du conteneur.

La Figure 7 représente le nombre de baies de 482,6 mm (19 pouces) qu'il est possible de loger dans un conteneur de largeur 2,438 m (8 pieds) en fonction de la disposition des baies : disposition selon l'art antérieur telle que représentée à la Figure 4; dispositions selon l'invention telles que représentées aux Figures 5 et 6. On constate que pour un conteneur d'une longueur de 6,1 m (20 pieds), 24 baies peuvent être installées pour les dispositions B et C alors que pour la disposition A, 20 baies seulement peuvent être installées, soit un gain de 20%. On constate que pour un conteneur d'une longueur de 12,2 m (40 pieds), 56 et 48 baies peuvent être installées respectivement pour les dispositions B et C alors que pour la disposition A, 42 baies seulement peuvent être installées, soit un gain de 33% pour la disposition B par rapport à la disposition A. Les dispositions B et C sont celles qui offrent la plus forte densité énergétique.

Un des avantages de l'invention est que chaque face de la baie est disponible à l'opérateur, ce qui n'est pas le cas dans la disposition de l'art antérieur dans laquelle l'une des deux faces de la baie repose contre une des parois latérales du conteneur. Selon l'invention, comme les deux faces de la baie sont disponibles, on réduit le nombre de baies et donc leur coût.

Un avantage supplémentaire de la disposition selon l'invention est que des couloirs de circulation sont crées entre deux rangées de baies disposées dans le sens de la largeur du conteneur. Ils sont de la largeur minimale autorisée par les normes et nécessitent l'ouverture de portes dans la paroi latérale du conteneur. Ils permettent à un opérateur de contrôler le fonctionnement des batteries.

Un avantage supplémentaire de la disposition selon l'invention est la réduction de l'échauffement à l'intérieur du conteneur. En effet, à quantité d'énergie égale, la réduction de la taille du conteneur à 12,2 m (20 pieds) permet de réduire l'échauffement du conteneur par le soleil. On peut donc réduire la puissance de climatisation de l'intérieur du conteneur. Le transport du conteneur est également plus facile.

Un avantage supplémentaire de la disposition selon l'invention est qu'en raison de la diminution de la taille conteneur, il est possible d'installer celui-ci dans une zone difficile d'accès, par exemple un chemin de montagne.

L'installation d'un champ de conteneurs nécessite des espaces libres autour des conteneurs. Ces espaces doivent être suffisants pour :
- permettre la circulation des hommes et des véhicules ;
- permettre la circulation d'engins de levage ;
- empêcher la propagation d'un éventuel sinistre ;
- pouvoir implanter des réseaux électriques de puissance desservant les conteneurs.

Pour un ensemble donné de conteneurs d'une capacité énergétique totale de 3 MW.h, le champ d'exploitation nécessaire a été établi et l'énergie surfacique pour trois distances type entre conteneurs a été calculée. La comparaison a été menée entre deux types de conteneur selon l'invention et un exemple de conteneur représentatif de l'art antérieur.

Les tableaux ci-dessous résument les densités d'énergie des différentes configurations selon l'espace entre conteneur (paramètre "a")

| Energie par unité de surface (kW.h/m²) pour un espace entre conteneur de 1,5 m | | | |
|---|---|---|---|
| | Conteneur de 6,1 m (20 pieds) de capacité énergétique 560 kW.h selon l'invention | Conteneur de 12,2 m (40 pieds) de capacité énergétique 1,1 MW.h selon l'invention | Conteneur de 16,2m (53 pieds) de capacité énergétique 560 kW.h selon l'invention incluant le convertisseur DC/AC |
| Nombre de conteneurs | 6 | 3 | 6 |
| Nombre de convertisseurs | 3 | 3 | 0 |
| Surface des conteneurs (m²) | 143 | 143 | 252 |
| Surface du champ d'exploitation (m²) | 341 | 321 | 510 |
| Energie par unité de surface | 9,9 | 10,3 | 5,9 |

| Energie par unité de surface (kW.h/m²) en fonction de la distance a entre les conteneurs | | | |
|---|---|---|---|
| a=5m | 3,1 | 3,5 | 2,2 |
| a=10m | 1,2 | 1,4 | 0,9 |
| a=15m | 0,63 | 0,77 | 0,53 |

Ces calculs montrent que l'avantage de densité d'énergie d'un conteneur unitaire est conservé sur un champ d'exploitation même si cet avantage diminue à mesure que l'espace libre augmente entre les conteneurs.

## Revendications

1. Installation de stockage (1) transportable d'une longueur d'au moins 6 m comprenant une pluralité de baies (2), chaque baie comprenant des batteries (3), chaque baie comprenant au moins une face d'insertion des batteries (5), **caractérisée en ce que** la moitié au moins des baies est disposée de manière à ce que ladite au moins une face d'insertion soit disposée perpendiculairement à la direction (4) définie par la longueur de l'installation de stockage, ladite installation comprenant au moins deux rangées de baies disposées perpendiculairement à la direction définie par la longueur de l'installation de stockage et il existe au moins un couloir de circulation entre ces deux rangées de baies.

2. Installation de stockage selon la revendication 1, qui est un conteneur de transport ou un abri préfabriqué.

3. Installation de stockage selon la revendication 2, qui est un conteneur de transport dont la longueur est choisie parmi les valeurs suivantes : 6,1 m (20 pieds), 12,2 m (40 pieds), 13,7 m (45 pieds) et 16,2 m (53 pieds), dont la largeur est de 2,438 m (8 pieds) et la hauteur est choisie parmi les valeurs suivantes : 2,591 m (8,5 pieds), 2,743 m (9 pieds) et 2,9 m (9,6 pieds).

4. Installation de stockage selon l'une des revendications 1 à 3, dans laquelle au moins 75% des baies sont disposées de manière à ce que ladite au moins une face d'insertion soit disposée perpendiculairement à la direction définie par la longueur de l'installation de stockage.

5. Installation de stockage selon la revendication 4, dans laquelle toutes les baies sont disposées de manière à ce que ladite au moins une face d'insertion soit disposée perpendiculairement à la direction définie par la longueur de l'installation de stockage.

6. Installation de stockage selon l'une des revendications précédentes, dans laquelle la largeur de chaque baie est de 482,6 mm (19 pouces).

7. Installation de stockage selon l'une des revendications précédentes, comprenant au moins une rangée de 4 baies.

8. Installation de stockage selon l'une des revendications précédentes, de longueur 6,1 m (20 pieds) comprenant 6 rangées de 4 baies.

9. Installation de stockage selon la revendication 7, de longueur 6,1 m (20 pieds) comprenant 4 rangées de 4 baies et 2 rangées de 2 baies.

10. Installation de stockage selon la revendication 7, de longueur 12,2 m (40 pieds) comprenant 12 rangées de 4 baies.

11. Installation de stockage selon la revendication 7, de longueur 12,2 m (40 pieds) comprenant 8 rangées de 4 baies, deux rangées de 2 baies et deux rangées de 3 baies dont au moins une face pour l'insertion des batteries est disposée selon la direction de la longueur de l'installation.

12. Installation de stockage selon l'une des revendications précédentes, de format parallélépipédique, dans laquelle au moins une paroi latérale située dans la direction définie par la longueur de l'installation de stockage comprend au moins une ouverture.

13. Installation de stockage selon l'une des revendications précédentes, dans laquelle les batteries sont de type lithium-ion.

14. Installation de stockage selon l'une des revendications précédentes, comprenant au moins un dispositif de conversion d'énergie électrique et/ou un dispositif électronique de gestion d'une batterie.

15. Ensemble formé par un empilement d'au moins deux installations de stockage, chaque installation étant selon l'une des revendications précédentes.

16. Ensemble formé par la juxtaposition d'au moins deux installations de stockage reposant sur une même surface, chaque installation étant selon l'une des revendications 1 à 14.

## Patentansprüche

1. Transportierbare Speicheranlage (1) mit einer Länge von mindestens 6 m, umfassend eine Vielzahl von Buchten (2), wobei jede Bucht Batterien (3) umfasst, wobei jede Bucht mindestens eine Einsetzseite der Batterien (5) umfasst, **dadurch gekennzeichnet, dass** mindestens die Hälfte der Buchten derart angeordnet ist, dass die mindestens eine Einsetzseite senkrecht auf die Richtung (4) angeordnet ist, die durch die Länge der Speicheranlage definiert ist, wobei die Anlage mindestens zwei Reihen von Buchten umfasst, die senkrecht zu der Richtung angeordnet sind, die durch die Länge der Speicheranlage definiert ist, und dass mindestens ein Zirkulationsgang zwischen diesen beiden Buchtenreihen vorhanden ist.

2. Speicheranlage nach Anspruch 1, die ein Transportbehälter oder ein vorgefertigter Verschlag ist.

3. Speicheranlage nach Anspruch 2, die ein Transportbehälter ist, dessen Länge unter den folgenden Werten ausgewählt ist: 6,1 m (20 Fuß), 12,2 m (40 Fuß), 13,7 m (45 Fuß) und 16,2 m (53 Fuß), dessen Breite 2,438 m (8 Fuß) ist, und dessen Höhe unter den folgenden Werten ausgewählt ist: 2,591 m (8,5 Fuß), 2,743 m (9 Fuß) und 2,9 m (9,6 Fuß).

4. Speicheranlage nach einem der Ansprüche 1 bis 3, bei der mindestens 75% der Buchten derart angeordnet sind, dass die mindestens eine Einsetzseite senkrecht auf die Richtung angeordnet ist, die durch die Länge der Speicheranlage definiert ist.

5. Speicheranlage nach Anspruch 4, bei der alle Buchten derart angeordnet sind, dass die mindestens eine Einsetzseite senkrecht auf die Richtung angeordnet ist, die durch die Länge der Speicheranlage definiert ist.

6. Speicheranlage nach einem der vorhergehenden Ansprüche, bei der die Breite jeder Bucht 482,6 mm (19 Zoll) beträgt.

7. Speicheranlage nach einem der vorhergehenden Ansprüche, umfassend mindestens 4 Reihen von Buchten.

8. Speicheranlage nach einem der vorhergehenden Ansprüche mit einer Länge von 6,1 m (20 Fuß), umfassend 6 Reihen zu 4 Buchten.

9. Speicheranlage nach Anspruch 7 mit einer Länge von 6,1 m (20 Fuß), umfassend 4 Reihen zu 4 Buchten und 2 Reihen zu 2 Buchten.

10. Speicheranlage nach Anspruch 7 mit einer Länge von 12,2 m (40 Fuß), umfassend 12 Reihen zu 4 Buchten.

11. Speicheranlage nach Anspruch 7 mit einer Länge von 12,2 m (40 Fuß), umfassend 8 Reihen zu 4 Buchten, zwei Reihen zu 2 Buchten und zwei Reihen zu 3 Buchten, bei denen mindestens eine Seit zum Einsetzen der Batterien in Richtung der Länge der Anlage angeordnet ist.

12. Speicheranlage nach einem der vorhergehenden Ansprüche mit einem parallelflachen Format, bei der mindestens eine Seitenwand, die sich in der Richtung befindet, die durch die Länge der Speicheranlage definiert ist, mindestens eine Öffnung umfasst.

13. Speicheranlage nach einem der vorhergehenden Ansprüche, bei der die Batterien vom Typ Lithium-Ionen-Batterien sind.

14. Speicheranlage nach einem der vorhergehenden Ansprüche, umfassend mindestens eine Vorrichtung zur Umwandlung von elektrischer Energie und/oder eine elektronische Steuervorrichtung einer Batterie.

15. Einheit, die von einer Stapelung von mindestens zwei Speicheranlagen gebildet ist, wobei jede Anlage nach einem der vorhergehenden Ansprüche ausgeführt ist.

16. Einheit, die durch die Nebeneinanderanordnung von mindestens zwei Speicheranlagen, die auf einer selben Fläche liegen, gebildet ist, wobei jede Anlage nach einem der Ansprüche 1 bis 14 ausgeführt ist.

## Claims

1. A transportable storage installation (1) with a length of at least 6 m comprising a plurality of racks (2), each rack comprising batteries (3), each rack comprising at least one face for inserting the batteries (5), **characterized in that** at least half of the racks are arranged so as said at least one insertion face is arranged perpendicularly to the direction (4) defined by the length of the storage installation, said installation comprising at least two rows of racks arranged perpendicularly to the direction defined by the length of the storage installation and at least one traffic corridor exists between these two rows of racks.

2. The storage installation according to claim 1, which is a transport container or a prefabricated shelter.

3. The storage installation according to claim 2, which is a transport container the length of which is selected from the following values: 6.1 m (20 ft), 12.2 m (40 ft), 13.7 m (45 ft) and 16.2 m (53 ft), the length of which is 2.438 m (8 ft) and the height of which is selected from the following values : 2.591 m (8.5 ft), 2.743 m (9 ft) and 2.9 m (9.6 ft).

4. The storage installation according to one of claims 1 to 3, wherein at least 75% of the racks are arranged so that at least one insertion face is arranged perpendicularly to the direction defined by the length of the storage installation.

5. The storage installation according to claim 4, wherein all the racks are arranged so that said at least one insertion face is arranged perpendicularly to the direction defined by the length of the storage installation.

6. The storage installation according to one of the preceding claims, wherein the width of each rack is 482.6 mm (19 in).

7. The storage installation according to one of the preceding claims, comprising at least one row of 4 racks.

8. The storage installation according to one of the preceding claims, having a length of 6.1 m (20ft) and comprising 6 rows of 4 racks.

9. The storage installation according to claim 7, with a length of 6.1 m (20ft) comprising 4 rows of 4 racks and 2 rows of 2 racks.

10. The storage installation according to claim 7, with a length of 12.2 m (40 ft) comprising 12 rows of 4 racks.

11. The storage installation according to claim 7, with a length of 12.2 m (40 ft) comprising 8 rows of 4 racks, 2 rows of 2 racks and 2 rows of 3 racks, at least one face of which for inserting the batteries is arranged along the direction of the length of the installation.

12. The storage installation according to one of the preceding claims, with a parallelepipedal format, wherein at least one side wall located in the direction defined by the length of the storage installation comprises at least one opening.

13. The storage installation according to one of the preceding claims, comprising batteries, preferably of the lithium-ion type.

14. The storage installation according to one of the preceding claims, comprising at least one electric energy conversion device and/or one battery management electronic device.

15. An assembly formed by a stack of at least two storage installations, each installation being according to one of the preceding claims.

16. An assembly formed by juxtaposing at least two storage installations resting on a same surface, each installation being according to one of claims 1 to 14.
